# EUROPÄISCHE PATENTSCHRIFT

(11) **EP 0 345 655 B1**
(45) Veröffentlichungstag und Bekanntmachung des Hinweises auf die Patenterteilung: **23.03.1994**
(21) Anmeldenummer: 89109992.1
(22) Anmeldetag: 02.06.1989
(51) Int. Cl.: B25F 5/00, F16P 3/00, G01P 15/08, B27B 17/08, B23B 45/02

(54) **Sicherheitsschaltung für Elektrohandwerkzeug**
Safety circuit for an electric hand tool
Circuit de sécurité pour outil électrique portable

(30) Priorität: 04.06.1988 DE 3819050
(43) Veröffentlichungstag der Anmeldung: 13.12.1989
(73) Patentinhaber: ROBERT BOSCH GMBH, 70442 Stuttgart (DE)
(72) Erfinder: Fauser, Edwin, D-7257 Ditzingen (DE); Scharf, Friedrich, Dr. Dipl.-Ing., D-7000 Stuttgart 40 (DE); Wolf, Kuno, Dipl.-Phys., D-7455 Jungingen (DE)

(56) Entgegenhaltungen:
- EP-A- 0 150 669
- DE-C- 3 418 059
- FR-A- 2 482 511
- US-A- 3 911 388
- US-A- 4 315 433
- PATENT ABSTRACTS OF JAPAN, Band 10, Nr. 116 (P-452)[2173], 30. April 1986;& JP-A-60 244 863 (TOYOTA JIDOSHA) 04-12-1985

## Beschreibung

Die Erfindung geht aus von einem Elektrohandwerkzeug mit einer Sicherheitsabschaltung nach der Gattung des Hauptanspruchs.

Elektrohandwerkzeuge mit arretierbarem Einschalter stellen ein erhebliches Sicherheitsrisiko dar, wenn sie beim Herunterfallen aufgrund des arretierten Einschalters weiterlaufen und dabei Schäden verursachen oder den Bediener verletzen. Es sind Einhandwinkelschleifer bekannt geworden, die sich beim Ablegen auf die Gehäuserückseite selbsttätig abschalten. Die Abschaltung wird dadurch erreicht, daß der Einschalter auf der Rückseite des Gehäuses im Bereich der Auflageflächen erhaben angebracht ist. Beim Ablegen des Winkelschleifers auf den Einschalter wird dieser durch das Eigengewicht der Maschine betätigt, wodurch die Unterbrechung des Stromkreises ausgelöst wird. Bei dieser Schutzschaltung ist ungünstig, daß der Wirkungsbereich des Schalters auf eine kleine Fläche begrenzt ist. Beim Herunterfallen des Elektrohandwerkzeuges ist nicht immer gewährleistet, daß die Maschine auf den Einschalter fällt und sich dadurch abschaltet. Die Wirksamkeit des Schalters ist begrenzt beispielsweise auf ein unachtsames Ablegen der laufenden Maschine, wenn die Abschaltung vergessen wurde.

Übliche Beschleunigungssensoren sind aus piezoelektrischen Kristallen aufgebaut und liefern bei Druck- oder Zugbelastung ein der Piezospannung entsprechendes Signal. Aufgrund der physikalischen Eigenschaften sind diese Spannungen im Bereich von einigen Mikrovolt bis Millivolt recht klein. Sie benötigen aufwendige Verstärkerschaltungen, um das kleine Nutzsignal zum Betätigen eines Schalters verwenden zu können. Auch sind Fehlauslösungen des Piezogebers durch Störimpulse kaum vermeidbar. Sie führen zu ungewünschten Arbeitsunterbrechungen. Ferner ist ungünstig, daß die Beschleunigungsmessung nur in einer Bewegungsrichtung wirksam ist.

In der deutschen Patentanmeldung P 37 03 630.0 wurde des weiteren ein Beschleunigungssensor vorgeschlagen, der aus einer piezoempfindlichen Kunststoffolie mit einer in einem Loch der Folie angeordneten schwingfähigen seismischen Masse aufgebaut ist. Bei Auslenkung der Folie durch die Trägheit der seismischen Masse entsteht eine relativ hohe Piezospannung von einigen hundert Millivolt, die an den beiden leitfähig beschichteten Oberflächen der Folie abgegriffen wird.

Ungünstig beim Einsatz in Werkzeugen ist, daß die Folie zur Befestigung der seismischen Masse gelocht werden muß, was die mechanische Belastbarkeit der Folie, insbesondere für den rauhen Betrieb in einem Handwerkzeug, herabsetzt. Auch muß die seismische Masse, wenn sie ein leitendes Material aufweist, isoliert werden, damit die an den leitenden Oberflächen der Folie anliegende Piezospannung nicht kurzgeschlossen wird. Weiterhin ist ungünstig, daß nur eine relativ dicke Folie verwendet werden kann, damit eine ausreichende mechanische Festigkeit mit entsprechender Federsteifigkeit erreicht wird und die Folie bei Überlast durch große Beschleunigungen beim Aufschlagen des Werkzeugs nicht überdehnt wird oder einreißen kann. Auch ist in Verbindung mit Handwerkzeugen ungünstig, daß die Empfindlichkeit des Beschleunigungssensors nicht einstellbar ist.

Aus der DE-30 18 952 A1 ist eine Motorkettensäge bekannt, die mittels eines Beschleunigungssensors abschaltbar ist. Der Beschleunigungssensor weist einen als Bolzen ausgebildeten Massekörper auf, der auf einer Stirnseite gelagert ist. Bei einem entsprechend großen Impuls kippt dieser Bolzen von seinem Halteteil und löst dabei einen Kontakt zum Abschalten des Motors aus. Nach dem Auslösen des Abschaltvorganges ist dieser Bolzen relativ mühsam wieder in seine Grundlage zurückführbar. Wenn dieses nicht gelingt, kann die Maschine nicht mehr benutzt werden.

Aus der US 4,315,433 ist ein Beschleunigungssensor bekannt, bei dem eine Kugel als seismische Masse zwischen zwei piezoelektrischen Folien gespannt ist. Die piezoelektrischen Folien sind mittels Ringen in einem ringförmigen Gehäuse eingespannt. Eine Einstellung der Empfindlichkeit des Beschleunigungssensors für eine bevorzugte Bewegungsrichtung ist nicht vorgesehen.

### Vorteile der Erfindung

Die erfindungsgemäße Anordnung mit den kennzeichnenden Merkmalen des Hauptanspruchs hat demgegenüber den Vorteil, daß das Elektrohandwerkzeug nach Erreichen eines vorgegebenen Beschleunigungswertes lageunabhängig abschaltet. Die Abschaltung des Elektrohandwerkzeuges wird durch einen oder mehrere Beschleunigungssensoren ausgelöst, die beim stoßartigen Aufschlagen der Maschine ein entsprechendes Spannungssignal an eine nachgeschaltete Steuerelektronik abgeben. Beschleunigungen, die durch Klopfen, Schlagen oder Vibrationen auftreten, liegen unter der Schaltschwelle und führen nicht zum Abschalten des Elektrohandwerkzeuges. Als weiterer Vorteil ist anzusehen, daß aufgrund der einfachen Konstruktion des Beschleunigungssensors eine zuverlässige Abschaltung des Elektrohandwerkzeugs erreicht wird. Wegen der hohen Signalspannung des Beschleunigungssensors reduzieren sich die Kosten für die Steuerelektronik erheblich.

Durch die in den Unteransprüchen aufgeführten Maßnahmen sind vorteilhafte Weiterbildungen und Verbesserungen der im Hauptanspruch angegebenen Vorrichtung möglich. Als Vorteil ist auch anzusehen, daß das Elektrohandwerkzeug bleibend abgeschaltet wird und erst durch Betätigung des Hauptschalters wieder in Betrieb genommen werden kann. Dadurch ist sichergestellt, daß das Elektrohandwerkzeug nicht plötzlich in Betrieb gehen kann und dadurch eventuell den Benutzer verletzt. Weiterhin ist vorteilhaft, daß der Beschleunigungssensor aufgrund seiner kleinen Bauform nahezu an beliebiger Stelle des Gehäuses angeordnet werden kann. Auch die Einstellung der Schaltschwellen des Beschleunigungssensors ist vorteilhaft, da dadurch eine einfache Adaptierung an verschiedene Gerätetypen ermöglicht wird.

Besonders vorteilhaft ist auch, daß der Beschleunigungssensor durch die Verwendung von mehreren Folien robust, einfach und überlastungssicher aufgebaut ist. Hinzu kommt, daß die jeweils äußeren metallisierten Flächen der Folien des Beschleunigugnssensors vorteilhaft eine Schirmung gegen elektrostatische Störfelder bilden, wodurch die Störempfindlichkeit herabgesetzt wird. Weiterhin ist vorteilhaft, daß der Beschleunigungssensor gegen Überdehnung der Folien durch Auslenkbegrenzungen geschützt ist, so daß auch eine sehr große Beschleunigung nicht zur Beschädigung oder Zerstörung des Sensors führt. Durch Änderung der seismischen Masse oder Änderung der Folienspannung im Gehäuserahmen kann besonders vorteilhaft die Empfindlichkeit des Beschleunigungssensors eingestellt und justiert werden. Auch wird die Empfindlichkeit des Beschleunigungssensors für alle Bewegungsachsen dadurch vorteilhaft erhöht, daß die seismische Masse unsymmetrisch wie beispielsweise als Kegel, Pyramide oder Raute ausgebildet ist.

### Zeichnung

Ausführungsbeispiele der Erfindung sind in der Zeichnung dargestellt und in der nachfolgenden Beschreibung näher erläutert. Es zeigen Figur 1a und b ein erstes Ausführungsbeispiel des Beschleunigungssensors, Figur 2a und b zeigt Ausführungsbeispiele der seismischen Masse und Figur 3 den schematischen Stromlaufplan der elektronischen Schaltung.

### Beschreibung der Ausführungsbeispiele

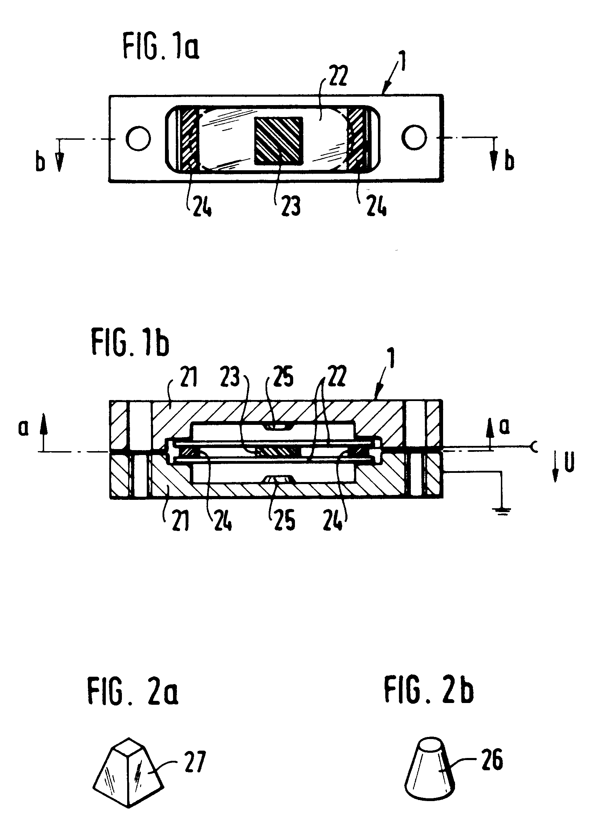

In Figur 1 ist ein Ausführungsbeispiel des für Elektrohandwerkzeuge geeigneten Beschleunigungssensors 1 in Draufsicht und Seitenansicht dargestellt. Zwei parallel angeordnete piezoempfindliche Kunststoffolien 22 sind über Distanzstücke 24 miteinander verbunden. Die Kunststoffolien sind beidseitig metallisiert, beispielsweise mit Aluminium bedampft, so daß sie elektrisch leitfähig sind. Die Distanzstücke 24 sind ebenfalls elektrisch leitfähig, so daß über die Distanzstücke 24 ein elektrischer Kontakt zu den Innenflächen der Kunststoffolien 22 gebildet wird. Hier erfolgt ein erster Potentialabgriff für die Piezospannung. Zwischen den Kunststoffolien 22 ist etwa mittig eine seismische Masse 23 befestigt, die bei Beschleunigung aufgrund ihrer Trägheit einer Auslenkung der Folien 22 bewirkt. Die parallelen Kunststoffolien 22 sind von einem Metallgehäuse 21 umschlossen. Das Metallgehäuse 21 weist zur Aufnahme der Kunststoffolien im Bereich der Distanzstücke 24 Aussparungen auf, in denen die Kunststoffolien 22 fest eingespannt werden. Durch Kontakt mit den metallisierten Oberflächen der Kunststoffolien 22 kann über das Metallgehäuse 21 der zweite Potentialpunkt für die Messung der Piezospannung abgegriffen werden. Zur Begrenzung der Auslenkung der Kunststoffolien 22 sind parallel dazu, etwa im Bereich der seismischen Masse, an der Innenseite des Metallgehäuses 21 Auslenkbegrenzungen 25 angebracht.

Im folgenden wird die Wirkungsweise dieses Beschleunigungssensors beschrieben. Bei Änderungen der Bewegungsgeschwindigkeit des Beschleunigungssensors 1 wird die seismische Masse 23 aufgrund ihrer Trägheit ihren Beharrungszustand beizubehalten versuchen, was zu einer Auslenkung der Kunststoffolien 22 führt. Aufgrund der Federsteifigkeit der Kunststoffolien 22 wirkt eine Rückstellkraft auf die Folien, die der Auslenkungsrichtung entgegengesetzt ist. Es entsteht eine Schwingung der Kunststoffolien 22, die aufgrund ihrer piezoelektrischen Eigenschaften zu einer oszillierenden elektrischen Spannung U führt. Die elektrische Spannung U wird zwischen einem der Distanzstücke 24 und dem Gehäuse 21 abgegriffen und der Auswerteschaltung 3 zugeführt.

Die Empfindlichkeit des Beschleunigungssensors für die x-, y- oder z-Richtung kann durch die Ausgestaltung der seismischen Masse 23 beeinflußt werden. Bei zylindrischen oder quaderförmigen seismischen Massen 23 ist die Empfindlichkeit des Beschleunigungssensors in allen drei Ebenen etwa gleich. Wird die seismische Masse, wie in Figur 2 dargestellt, kegelförmig oder pyramidenförmig ausgebildet, dann wird die Empfindlichkeit in einer der drei Beschleunigungsebenen geändert. Bei Einbau des Beschleunigungssensors in ein Elektrohandwerkzeug kann durch geeignete Wahl sowohl der seismischen Masse, wie auch bei entsprechender Vorspannung der Folien die Ansprechempfindlichkeit des Sensors eingestellt werden. Durch die Wahl der geeigneten Ausführungsform kann beispielsweise die Ansprechempfindlichkeit der Abschaltelektronik erhöht werden, wenn das Elektrowerkzeug beispielsweise auf die Antriebsspindel fällt. Die Ansprechempfindlichkeit des Beschleunigungssensors kann aber auch so ausgerichtet sein, daß in Abhängigkeit von der Schwerpunktlage des Elektrohandwerkzeugs die bevorzugt aufschlagende Fläche des Elektrohandwerkzeugs besonders sensibilisiert wird.

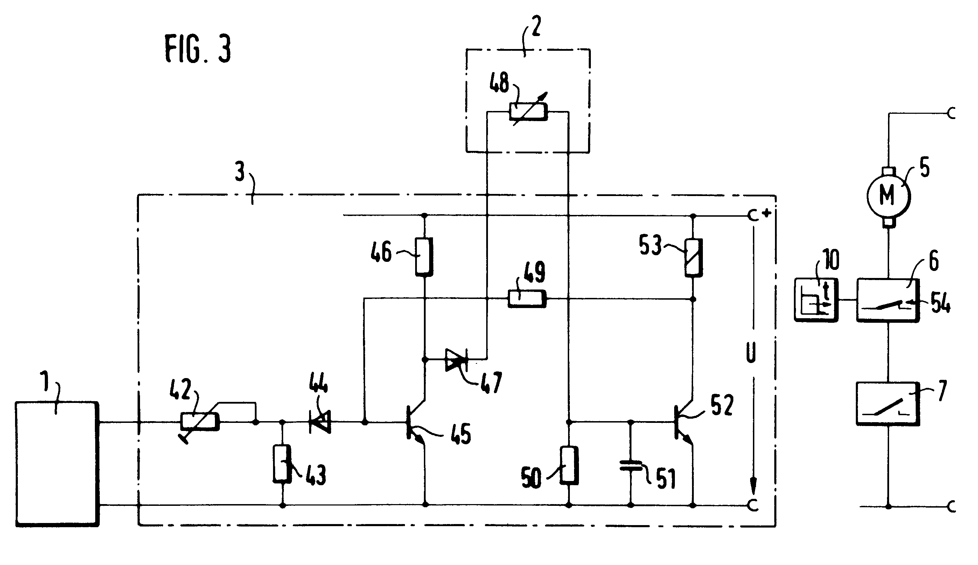

In Figur 3 ist schematisch der Stromlaufplan dargestellt. Das Spannungssignal des Beschleunigungssensors 1 wird auf eine Auswerteschaltung 3 geschaltet, die bei Überschreiten der Schwellwertvorgabe 2 ein Abschaltsignal an den Drehzahlsteller 6 zum Abschalten des Stromkreises abgibt. Die Schaltung 3 verharrt in abgeschaltetem Zustand, bis die Stromversorgung durch den Hauptschalter 7 unterbrochen wird. Bei erneutem Einschalten des Hauptschalters 7 wird die Schaltung 3 in den Arbeitszustand zurückgeschaltet, so daß sie wieder zur Auswertung der Beschleunigungssignale bereit ist.

Im folgenden wird der Aufbau der Auswerteschaltung 3 beschrieben.

Der Beschleunigungssensor 1 ist über einen Trimmwiderstand 42 und eine Diode 44 an die Basis des Transistors 45 geschaltet, wobei die Anode der Diode 44 mit der Basis des Transistors 45 verbunden ist. Zwischen der Kathode der Diode 44 und dem Trimmer 42 ist ein Ableitwiderstand 43 gegen Masse geschaltet. Der Kollektor des Transistors 45 hängt einerseits über den Widerstand 46 am Pluspol der Spannungsversorgung U, andererseits ist er über die Diode 47 und das Potentiometer 48 mit der Basis des Transistors 52 verbunden. Parallel zur Basis-Emitter-Strecke sind der Widerstand 50 und der Kondensator 51 geschaltet. Der Kollektor ist einerseits über den Widerstand 49 auf die Basis des Transistors 45 rückgekoppelt, andererseits über das Schaltelement 53 mit der Spannungsquelle U verbunden. Der Kontakt 54 des Schaltelements 53 ist mit dem Drehzahlsteller 6 verbunden und bewirkt eine Unterbrechung des Motorstromkreises.

### Die Funktion der Auslöseschaltung ist folgende:

Beim Einschalten des Hauptschalters 7 ist der Kontakt 54 in seiner Ruhestellung geschlossen. Die Transistoren 45 und 52 wirken als RS-Flipflop, wobei der Transistor 52 durch die R/C-Kombination 50, 51 gesperrt und der Transistor 45 leitend ist. Tritt ein Beschleunigungssignal auf, dann wird nach Überschreiten der vom Potentiometer 48 eingestellten Schwelle des Schwellwertgebers 2 der Transistor 52 leitend. Dadurch wird das Schaltelement 53 aktiviert und unterbricht den Hauptstromkreis. Dieser Zustand bleibt bestehen, bis durch den Hauptschalter 7 die Spannung unterbrochen wird. Beim Einschalten der Spannung U wird der Transistor 52 wieder gesperrt. Dadurch ist sichergestellt, daß der Motor nicht selbsttätig wieder anlaufen kann.

Um Beschleunigungssignale durch Schwingungen während des Hochlaufes des Ankers zu unterdrücken, ist mit dem Drehzahlregler 6 ein Zeitverzögerungsglied 10 mit einstellbarer Zeitkonstante verbunden. Diese Maßnahme verhindert ein ungewolltes Abschalten des Elektrohandwerkzeuges während der Hochlaufphase.

Die Anordnung des Beschleunigungssensors 1 kann zu einer kompakten Einheit mit der Auswerteschaltung verbunden werden. Dadurch kann diese Einheit an einer geeigneten Stelle des Elektrohandwerkzeuges eingebaut werden, ohne daß die Ansprechempfindlichkeit des Beschleunigungssensors beeinträchtigt wird.

## Patentansprüche

1. Elektrohandwerkzeug, beispielsweise eine Handbohrmaschine oder Säge, mit einem Beschleunigungssensor (1), der eine seismische Masse (23) aufweist, die bei Erreichen des vorgegebenen Beschleuigungswertes den Elektromotor des Elektrohandwerkzeuges über ein Schaltelement (53, 54) lageunabhängig abschaltet, dadurch gekennzeichnet daß die seismische Masse (23; 26; 27) zwischen zwei oder mehreren piezoelektrischen Kunststoffolien (22) federnd angeordnet ist, daß die Empfindlichkeit des Beschleunigungssensors in eine Bewegungsrichtung dadurch erhöht ist, daß sich der Schwerpunkt der seismischen Masse (23; 26; 27) nicht mittig zwischen den piezoelektrischen Kunststoffolien befindet, und daß die Kunststoffolien (22) beidseitig metallisierte Flächen aufweisen, wobei die äußeren und inneren Flächen jeweils elektrisch miteinander verbunden sind und jeweils einen Spannungsabgriff für die Piezospannung bilden, die einer dem Schaltelement (53, 54) vorgeschalteten Auswerteschaltung (3) zuführbar ist.

2. Elektrohandwerkzeug nach Anspruch 1, dadurch gekennzeichnet, daß parallel zu den Kunststoffolien (22) Auslenkungsbegrenzungen (25) angebracht sind, die die Auslenkung der Kunststoffolien (22) mit der seismischen Masse (23; 26; 27) begrenzen.

3. Elektrohandwerkzeug nach Anspruch 1 oder Anspruch 2, dadurch gekennzeichnet, daß die Kunststoffolien (22) in einem allseitig geschlossenen Gehäuse (21) angeordnet sind.

4. Elektrohandwerkzeug nach einem der vorhergehenden Ansprüche, dadurch gekennzeichnet, daß nach einer Abschaltung durch den Beschleunigungssensor (1) das Wiedereinschalten des Elektrohandwerkzeugs durch einen Hauptschalter (7) erfolgt.

5. Elektrohandwerkzeug nach einem der vorhergehenden Ansprüche, dadurch gekennzeichnet, daß die Ansprechschwelle und/oder die Zeitschwelle zum Abschalten des Elektrohandwerkzeugs einstellbar ist.

6. Elektrohandwerkzeug nach einem der vorhergehenden Ansprüche, dadurch gekennzeichnet daß der Beschleunigungssensor (1) mit der Auswerteschaltung (3) eine Einheit bildet.

## Claims

1. Electric hand tool, for example a hand-held drill or saw, having an acceleration sensor (1) which has a seismic mass (23) which switches off the electric motor of the electric hand tool irrespective of its orientation, via a switching element (53; 54), on reaching the predetermined acceleration value, characterized in that the seismic mass (23; 26; 27) is arranged in a sprung manner between two or more piezo-electric plastic films (22), in that the sensitivity of the acceleration sensor is increased in one movement direction, in that the centre of gravity of the seismic mass (23; 26; 27) is not located centrally between the piezo-electric plastic films (22), and in that the plastic films (22) have metallized surfaces on both sides, the outer and inner surfaces in each case being electrically connected to one another and in each case forming a voltage pick-off for the piezo-voltage which can be supplied to an evaluation circuit (3) which is connected upstream of the switching element (53; 54).

2. Electric hand tool according to Claim 1, characterized in that deflection-limiting devices (25) are fitted parallel to the plastic films (22), which deflection-limiting devices (25) limit the deflection of the plastic films (22) with the seismic mass (23; 26; 27).

3. Electric hand tool according to Claim 1 or Claim 2, characterized in that the plastic films (22) are arranged in a housing (21) which is sealed on all sides.

4. Electric hand tool according to one of the preceding claims, characterized in that the electric hand tool is switched on again by means of a main switch (7) after it has been disconnected by means of the acceleration sensor (1).

5. Electric hand tool according to one of the preceding claims, characterized in that the response threshold and/or the time threshold for disconnecting the electric hand tool is adjustable.

6. Electric hand tool according to one of the preceding claims, characterized in that the acceleration sensor (1) forms a unit with the evaluation circuit (3).

## Revendications

1. Outil électrique portable, par exemple perceuse à main ou scie, comportant un capteur d'accélération (1) avec une masse séismique (23) qui lorsque l'on atteint une accélération prédéterminée, coupe le moteur électrique de l'outil par un élément de commutation (53, 54) dépendant de la position, outil caractérisé en ce que la masse séismique (23, 26, 27) est suspendue élastiquement entre deux ou plusieurs feuilles de matière plastique (22) piézo-électrique, la sensibilité du capteur d'accélération étant augmentée dans une direction de mouvement du fait que le centre de gravité de la masse séismique (23, 26, 27) ne se trouve pas au milieu entre les feuilles de matière plastique (22) piézo-électriques, et les feuilles de matière plastique (22) présentent sur leur deux faces des surfaces métallisées, les surfaces extérieures et intérieures chaque fois reliées électriquement formant une prise de tension pour la tension piézo-électrique, cette tension étant fournie à un circuit d'exploitation (3) en amont de l'élément de commutation (53, 54).

2. Outil électrique portable selon la revendication 1, caractérisé en ce que parallèlement aux feuilles de matière plastique (22) on a des limites de débattement (25) qui limitent le débattement des feuilles de matière plastique (22) avec la masse séismique (23, 26, 27).

3. Outil électrique portable selon la revendication 1 ou 2, caractérisé en ce que les feuilles de matière plastique (22) sont prévues dans un boîtier (21) fermé de tous côtés.

4. Outil électrique portable selon l'une des revendications précédentes, caractérisé en ce qu'après coupure par le capteur d'accélération (1), le réenclenchement de l'outil a lieu par le commutateur principal (7).

5. Outil électrique portable selon l'une des revendications précédentes, caractérisé en ce que le seuil d'excitation et/ou le seuil de temps pour couper l'outil électrique est réglable.

6. Outil électrique portable selon l'une des revendications précédentes, caractérisé en ce que le capteur d'accélération (1) forme un ensemble avec le circuit d'exploitation (3).
